# EUROPÄISCHE PATENTSCHRIFT

(11) **EP 1 146 242 B1**
(45) Veröffentlichungstag und Bekanntmachung des Hinweises auf die Patenterteilung: **07.06.2006**
(21) Anmeldenummer: 01104666.1
(22) Anmeldetag: 24.02.2001
(51) Int. Cl.: F16D 23/04

(54) **Synchronkörper einer Synchronisiereinrichtung aus Blech**
Synchronizer body for a sheet metal synchronizer assembly
Corps de sychroniseur pour ensemble de sychronisation en tôle

(30) Priorität: 12.04.2000 DE 10018091
(43) Veröffentlichungstag der Anmeldung: 17.10.2001
(73) Patentinhaber: Schaeffler KG, 91074 Herzogenaurach (DE)
(72) Erfinder: Buer, Gerald, 96172 Mühlhausen (DE); Röckelein, Ernst, 96138 Burgebach (DE); Soyka, Wilfried, 91074 Herzogenaurach (DE); May, Kristina, 92237 Sulzbach-Rosenberg (DE)

(56) Entgegenhaltungen:
- DE-A- 19 821 565
- DE-A- 19 832 729
- DE-A- 19 917 230
- US-A- 2 333 165
- US-A- 3 524 525
- US-A- 5 657 844

## Beschreibung

### Gebiet der Erfindung

Die Erfindung betrifft einen Synchronkörper einer Synchronisiereinrichtung, der drehstarr verbindbar ist auf einer Getriebewelle mit einem Verschiebesitz für eine drehstarr auf dem Synchronkörper anordenbare Schiebemuffe sowie wenigstens einer Aufnahme für mindestens ein Arretierelement oder Sperrelement in dem Synchronkörper, wobei der Synchronkörper eine im montierten Zustand der Längsmittelachse der Getriebewelle entsprechende Drehachse aufweist, wobei zumindest ein erster Abschnitt und ein zweiter Abschnitt des synchronkörpers jeweils aus Blech ausgeformt sowie in Querrichtung auf die Drehachse gesehen parallel zueinander angeordnet sind, der Verschiebesitz mit wenigstens einer radial nach außen weisenden und zumindest teilweise profilierten Mantelfläche versehen ist und wobei die Aufnahme die Mantelfläche segmentweise in Umfangsrichtung unterbricht.

### Hintergrund der Erfindung

Für die spanlose Fertigung von Synchronkörpern wird als Ausgangsmaterial Blech- oder Bandmaterial verwendet, das durch Trennen und Umformen in seine bestimmungsgemäße Form gebracht ist. Die Hauptvorteile derartig gefertigter Synchronkörper liegen in relativ geringen Kosten für ihre Herstellung in der Massenproduktion sowie in ihrem geringen Gewicht. Weiterhin wird der Großteil des zur Fertigung eingesetzten Ausgangsmateriales auch tatsächlich zur Bildung der geometrischen Form des Synchronkörpers verwendet und geht somit nicht, wie bei der spanabhebenden Fertigung von Synchronkörpern, als Abfallmaterial verloren. Einen durch Umformen gefertigten Synchronkörper nach dem Stand der Technik beschreibt DE 198 21 565 A1. Dieser Synchronkörper ist aus zwei an ihren Stirnseiten miteinander verbundenen Abschnitten gebildet. Jeder dieser Abschnitte ist in einem Umformverfahren aus Blech geformt und bildet jeweils eine Hälfte des Synchronkörpers und damit die Hälfte des Verschiebesitzes für eine drehstarr auf dem Synchronkörper angeordnete Schiebemuffe. Gleichzeitig bildet jeder dieser Abschnitte die Hälfte einer Verbindung in Form einer Nabe für die drehstarre Anordnung des Synchronkörpers auf einer Getriebewelle.

Alternativ ist in DE 198 21 565 A1 ein Synchronkörper beschrieben, bei dem die Nabe, der Verschiebesitz und ein die Nabe mit dem Verschiebesitz verbindende Steg als Einzelteile aus Blech gefertigt und anschließend zusammengesetzt sind. Gemeinsame Merkmale der vorgenannten Varianten sind der geringe Materialeinsatz für ihre Herstellung sowie ihr geringes Gewicht. An beiden Ausführungsformen der Synchronkörper sind in die Mantelfläche Längsnuten eingebracht, die in Längsrichtung durchgehen und sich radial bis in den Steg hinein erstrecken. Diese Längsnuten dienen als Aufnahme für Arretierelemente bzw. Druckstücken oder Kombinationen von Arretierelementen und Druckstücken. Die beschriebenen Ausführungsformen der Synchronkörper nach dem Stand der Technik zeichnen sich besonders durch ihren geringen Materialeinsatz, ihre einfache Herstellbarkeit und ihr geringes Gewicht aus und sind insbesondere an einfach gestalteten Synchronisiereinrichtungen mit geringen Belastungen sehr gut einsetzbar.

Schwierig gestaltet sich die Fertigung eines derartigen Synchronkörpers jedoch, wenn an diesem Anschläge, Verdrehsicherungen und ähnliche Elemente für beispielsweise zur Synchronisiereinrichtung gehörende Synchronringe, Synchronzwischenringe bzw. benachbarte Zahnräder vorzusehen sind. Die Anschläge bzw. die Verdrehsicherungen sind zumeist im Bereich des Steges und des Verschiebesitzes angeordnet. Diese Anschläge bestimmen und begrenzen den axialen Bewegungsraum von z. B. der Synchronisiereinrichtung benachbart angeordneten Losrädern oder zur Synchronisiereinrichtung gehörenden Synchronringen bzw. Synchronzwischenringen. Die durch die Wandstärke des Bleches bestimmte Stegbreite von Synchronkörpern nach dem Stand der Technik reicht in der Regel nicht aus, um den notwendigen axialen Abstand der Anschläge in Längsrichtung abzusichern. Verdrehsicherungen müssen extra ausgearbeitet werden oder sind durch extra gefertigte Einzelteile an dem Synchronkörper gebildet.

### Zusammenfassung der Erfindung

Zu dem Zeitpunkt, an dem die nachfolgend beschriebene Erfindung gemacht wurde, bestand die Aufgabe, einen in der Massenfertigung kostengünstig zu fertigenden Synchronkörper mit Verdrehsicherungen und Anschlägen zu schaffen, der von geringem Gewicht und sehr hoher Festigkeit ist.

Diese Aufgabe wird nach dem kennzeichnenden Teil des Anspruches 1 dadurch gelöst, dass der erste Abschnitt zusammen mit dem zweiten Abschnitt wenigstens einen Hohlraum einschließen, die Aufnahme in Längsrichtung an zumindest einer Seite durch einen in Umfangsrichtung verlaufenden ersten Seitensteg begrenzt ist und dass der Seitensteg mit einem Sicherungsmittel zum Sichern wenigstens eines mit dem Synchronkörper zusammenwirkenden Synchronringes gegen Verdrehen versehen ist. Zwei Blechabschnitte, die aneinander gefügt oder in anderer geeigneter Weise aneinander befestigt sind und zwischen sich einen Hohlraum bilden, bilden gleichermaßen ein Hohlprofil, welches trotz Dünnwandigkeit sehr hohe Widerstandsmomente gegen Verdrehung und Biegung bietet.

Der oder die Seitenstege stabilisieren den Synchronkörper zusätzlich. Der Seitensteg oder die Seitenstege begrenzen die Aufnahme in Längsrichtung, bieten gleichzeitig eine Basis für ein Sicherungsmittel. Mit diesem Sicherungsmittel wird ein Synchronisierring gegen Verdrehen relativ zum Synchronkörper gesichert. Dieses Sicherungsmittel ist vorzugsweise während des Formungsprozeßes des Abschnittes am Steg einzubringen. Das Sicherungsmittel ist, wie bevorzugte Ausgestaltungen der Erfindung vorsehen, durch eine Aussparung oder eine Verformung des Steges bzw. am Steg gebildet. Die Aussparung ist in Längsrichtung der Getriebewelle gesehen zu der von der Aufnahme abgewandten Seite, also in Längsrichtung gesehen nach außen hin, geöffnet. Die Verformung des Steges bzw. die Verformung am Steg ist beliebig gestaltbar. Eine radial nach innen abgehende oder radial nach außen hervorstehende und von dem gedachten Verlauf des Kreisbogens, welcher den Fußkreis der Verzahnung des Schiebesitzes umreißt, abweichende Verformung ist durch Prägen oder während des Ziehprozesses einzubringen. Eine bevorzugte Ausgestaltung einer derartigen Verformung ist durch eine Abflachung gebildet. Vorstellbar ist aber auch, dass die Verformung durch ein Segment eines Kreisbogens beschrieben ist, welches einen größeren oder kleineren Radius als den des Fußkreises aufweist.

In einer weiteren Ausgestaltung der Erfindung ist vorgesehen, dass der erste Abschnitt und der zweite Abschnitt jeweils napfförmig ausgebildet und aneinander ausgerichtet sind. Die Abschnitte schließen einen ringförmig ausgebildeten Hohlraum zwischen sich ein und zumindest einer der Abschnitte bildet mit einem den Hohlraum in Längsrichtung begrenzenden Wandabschnitt außenseitig an einer der Stirnseiten des Synchronkörpers einen Anschlag für ein sich der Synchronisiereinrichtung anschließendes Zahnrad.

Der Verschiebesitz ist durch einen mit dem Steg und dem Sicherungsmittel versehenen ringförmig gebogenen und an zumindest einem der Abschnitte befestigten Blechstreifen gebildet, wie eine Ausgestaltung der Erfindung vorsieht. Der Verschiebesitz ist also separat von dem ersten und dem zweiten Abschnitt gefertigt. Eine derartige Gestaltung eines Synchronkörpers macht es möglich, die Aufnahmen auf einfache Art in einen Blechstreifen einzustanzen, die für den Verschiebesitz notwendige Verzahnung einzuprägen bzw. einzurollieren und gleichzeitig in die Stege durch Stanzen oder Prägen das Sicherungsmittel einzubringen. Der Blechstreifen wird im Anschluss gebogen und an seinen Enden aneinandergefügt, z. B. durch Schweißen an einem oder beiden Abschnitten befestigt.

### Kurze Beschreibung der Zeichnung

Die Erfindung wird nachfolgend anhand von zwei Ausführungsbeispielen erläutert. Es zeigen:
- Figur 1: die Hauptansicht eines Ausführungsbeispieles eines Synchronkörpers gemäß Erfindung mit Sicherungsmitteln, die durch Aussparungen gebildet sind,
- Figur 2: eine Schnittdarstellung des Synchronkörpers nach Figur 1 entlang der Linie II-II,
- Figur 3: den Verschiebesitz des Synchronkörpers nach Figur 1 in einer Abwicklung,
- Figur 4: eine Prinzipdarstellung des Eingriffes eines Synchronringes in die Aussparung des Verschiebesitzes eines Synchronkörpers gemäß Figur 1,
- Figur 5: die Hauptansicht eines weiteren Ausführungsbeispiels eines Synchronkörpers gemäß Erfindung.

### Detaillierte Beschreibung der Zeichnungen

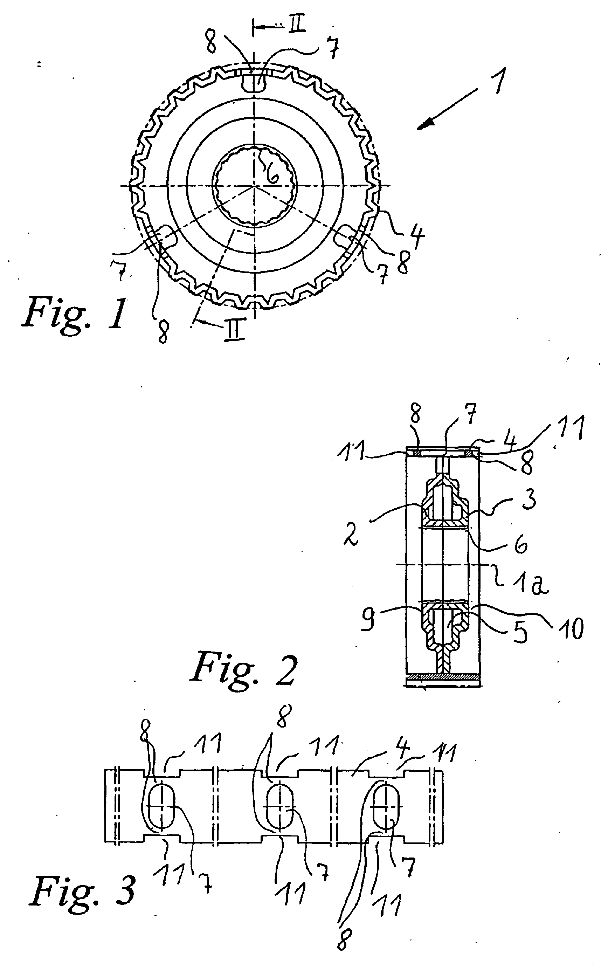

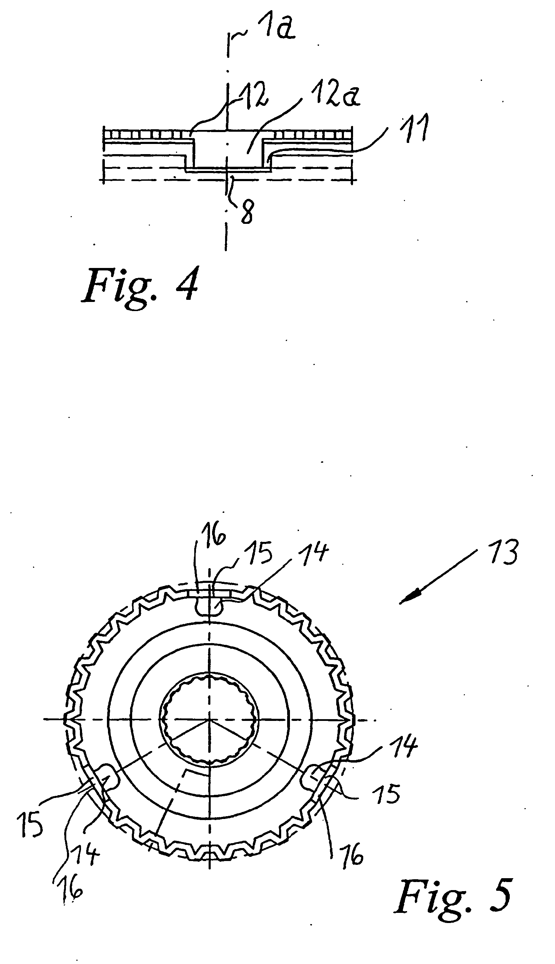

In Figur 1 und 2 ist mit 1 ein Ausführungsbeispiel eines erfindungsgemäßen Synchronkörpers dargestellt. Der Synchronkörper 1 ist aus einem ersten Abschnitt 2 und einem zweiten Abschnitt 3 sowie einem Verschiebesitz 4 zusammengesetzt. Der erste Abschnitt 2 und der zweite Abschnitt 3 sind durch ringförmig ausgebildete schalenförmige Segmente gebildet. Die Abschnitte 2 und 3 sind an ihren Rändern zueinander ausgerichtet und miteinander verschweißt. Der erste Abschnitt 2 und der zweite Abschnitt 3 schließen einen Hohlraum 5 zwischen sich ein und bilden gleichzeitig eine Nabe für eine Verbindung des Verschiebesitzes 4 mit einer nicht dargestellten Getriebewelle. Der Synchronkörper 1 greift mit einer Verzahnung 6 in die Getriebewelle ein. Die Verzahnung ist anteilig in den ersten Abschnitt 2 und den zweiten Abschnitt 3 eingeformt. Die Verzahnung 6 sorgt für eine drehstarre Anordnung des Synchronkörpers 1 auf der Getriebewelle, wobei die Drehachse 1a des Synchronkörpers 1 der Längsmittelachse der Getriebewelle entspricht. In dem Synchronkörper 1 sind drei Aufnahmen 7 ausgebildet. Die Aufnahmen 7 durchbrechen die Außenmantelfläche des Verschiebesitzes 4 und erstrecken sich in radialer Richtung nach innen in die Wandungen der Abschnitte 2 und 3. Die Aufnahme 7 ist in beiden Längsrichtungen des Synchronkörpers 1 durch jeweils einen Steg 8 begrenzt. Der erste Abschnitt 2 und der zweite Abschnitt 3 weisen jeweils an der Außenseite des den Hohlraum 5 begrenzenden Wandabschnittes einen Anschlag 9 bzw. 10 auf.

Figur 3 zeigt den Verschiebesitz 4 des Synchronkörpers 1 nach Figur 1 und 2 in einer Abwicklung. Der Verschiebesitz 4 ist durch einen Blechstreifen gebildet. Ein Teil der Aufnahme 7 ist in den Verschiebesitz 4 am flachen Blechstreifen gestanzt. An jeweils der Außenseite der Stege 8 ist ein Sicherungsmittel in Form einer in Längsrichtung der Getriebewelle nach außen geöffneten Aussparung 11 ausgeschnitten.

In Figur 4 ist ein Abschnitt eines Synchronringes 12 dargestellt, der mittels eines Vorsprunges 12a in die Aussparung 11 eingreift. Der Synchronring 12 ist auf diese Weise gegen das Verdrehen relativ zum Synchronkörper 1 um die Drehachse 1 a gesichert.

Figur 5 zeigt ein weiteres Ausführungsbeispiel eines erfindungsgemäßen Synchronkörpers 13. Aufnahmen 14 sind seitlich jeweils durch einen Steg 15 begrenzt. Die Kontur des Steges 15 weicht in ihrem Verlauf auf Grund einer Verformung von der gedachten Kreisbogenform, die die Außenkontur des Synchronkörpers 13 im Querschnitt am Zahngrund der Zähne des Verschiebesitzes umreißt, ab. Die Verformung ist durch eine Abflachung 16 gebildet.

### Bezugszeichen

- 1: Synchronkörper
- 1a: Drehachse
- 2: erster Abschnitt
- 3: zweiter Abschnitt
- 4: Verschiebesitz
- 5: Hohlraum
- 6: Verzahnung
- 7: Aufnahme
- 8: Steg
- 9: Anschlag
- 10: Anschlag
- 11: Aussparung
- 12: Synchronring
- 12a: Vorsprung
- 13: Synchronkörper
- 14: Aufnahme
- 15: Steg
- 16: Abflachung

## Patentansprüche

1. Synchronkörper (1, 13) einer Synchronisiereinrichtung der drehstarr auf einer Getriebewelle verbindbar ist und mit einem Verschiebesitz (4) für eine drehstarr auf dem Synchronkörper (1) anordenbare Schiebemuffe sowie wenigstens einer Aufnahme (7, 14) für mindestens ein Arretierelement oder Sperrelement in em Synchronkörper (1, 13), wobei der Synchronkörper (1, 13) eine im momtierten Zustand der Längsmittelachse der Getriebewelle entsprechende Drehachse (1a) aufweist, wobei zumindest ein erster Abschnitt (2) und ein zweiter Abschnitt (3) des synchronkörpers jeweils aus Blech geformt sowie in Querrichtung auf die Drehachse gesehen parallel zueinander aneinander angeordnet sind, wobei der Verschiebesitz (4) mit wenigstens einer radial nach außen weisenden, und zumindest teilweise profilierten Mantelfläche versehen ist, und wobei die Aufnahme (7, 14) die Mantelfläche segmentweise in Umfangsrichtung unterbricht, **dadurch gekennzeichnet, dass** der erste Abschnitt (2) und der zweite Abschnitt (3) gemeinsam wenigstens einen Hohlraum (5) einschließen, dass die Aufnahme (7) in Längsrichtung an zumindest einer Seite durch einen in Umfangsrichtung verlaufenden ersten Steg (8) begrenzt ist und dass der Steg (8) mit einem Sicherungsmittel zum Sichern wenigstens eines mit dem Synchronkörper (1, 13) zusammenwirkenden Synchronringes gegen Verdrehen versehen ist.

2. Synchronkörper nach Anspruch 1, **dadurch gekennzeichnet, dass** das Sicherungsmittel durch eine Aussparung (11) gebildet ist, wobei die Aussparung (11) in Längsrichtung der Drehachse zu der von der Aufnahme (7) abgewandten Seite hin geöffnet ist.

3. Synchronkörper nach Anspruch 1 **dadurch gekennzeichnet, dass** das Sicherungsmittel in einer Zahnlücke angeordnet ist und dass das Sicherungsmittel durch eine von der Kreisbogenform des Grundkreises der Verzahnung abweichende Verformung des Steges gebildet ist.

4. Synchronkörper nach Anspruch 3, **dadurch gekennzeichnet, dass** die Verformung durch eine Abflachung (16) gebildet ist.

5. Synchronkörper nach Anspruch 2 oder 3, **dadurch gekennzeichnet, dass** der erste Abschnitt (2) und der zweite Abschnitt (3) jeweils napfförmig ausgebildet und zueinander ausgerichtet sind, wobei sie zwischen ihren einander zugewandten Stirnseiten einen ringförmig ausgebildeten Hohlraum (5) einschließen, dass zumindest einer der Abschnitte (2, 3) mit einem den Hohlraum in Längsrichtung begrenzenden Wandabschnitt am Synchronkörper stirnseitig einen Anschlag (9, 10) bildet.

6. Synchronkörper nach Anspruch 2 oder 3, **dadurch gekennzeichnet, dass** der Verschiebesitz (4) durch einen mit dem Steg (4) und dem Sicherungsmittel versehenen ringförmig gebogenen und an zumindest einem der Abschnitte (2, 3) befestigten Blechstreifen gebildet ist.

## Claims

1. Synchroniser body (1, 13) of a synchronising device, which synchroniser body (1, 13) can be connected fixed in rotation to a transmission shaft, said synchronising device comprising a sliding seat (4) for a sliding sleeve that can be arranged fixed in rotation on the synchroniser body (1) and further comprising at least one reception (7, 14) for at least one stop or locking element in the synchroniser body (1, 13), said synchroniser body (1, 13) having an axis of rotation (1 a) that corresponds to the central longitudinal axis of the transmission shaft in the installed state, at least one first section (2) and one second section (3) of the synchroniser body being formed out of sheet metal and arranged, as viewed in a top view in transverse direction of the axis of rotation, on and parallel to each other, said sliding seat (4) being provided with at least one peripheral surface that is oriented radially outwards and is at least partially profiled, and said reception (7, 14) interrupting the peripheral surface segment-wise in peripheral direction, **characterised in that** the first section (2) and the second section (3) together enclose at least one hollow space (5), the reception (7) is defined in longitudinal direction at least on one side by a first web (8) that extends in peripheral direction, and the web (8) is provided with a securing means for securing against rotation, at least one synchroniser ring that cooperates with the synchroniser body (1, 13).

2. Synchroniser body according to claim 1, **characterised in that** the securing means is formed by a recess (11) that, in longitudinal direction of the axis of rotation, is open towards the side turned away from the reception (7).

3. Synchroniser body according to daim 1, **characterised in that** the securing means is arranged in a tooth gap and is formed by a deformation of the web, which deformation deviates from the circular arc shape of the base cirde of the gearing.

4. Synchroniser body according to daim 3, **characterised in that** the deformation is constituted by a flattened region (16).

5. Synchroniser body according to daim 2 or 3, **characterised in that** both the first section (2) and the second section (3) have a cup-shaped configuration and are aligned to each other, these first and second sections enclosing a hollow space (5) of annular shape between their opposing front ends, and a portion of a wall of at least one of the sections (2, 3) that delimits the hollow space in longitudinal direction forms a stop (9, 10) on a front end of the synchroniser body.

6. Synchroniser body according to daim 2 or 3, **characterised in that** the sliding seat (4) is formed by a sheet metal strip provided with the web (8) and the securing means, which sheet metal strip is bent into an annular shape and fixed to at least one of the sections (2, 3).

## Revendications

1. Corps de synchronisation (1, 13) d'un dispositif de synchronisation, lequel corps de synchronisation (1, 13) peut être relié, de manière fixe en rotation, à un arbre de transmission, ledit dispositif de synchronisation comprenant un siège de glissement (4) pour un manchon coulissant qui peut être agencé de manière fixe en rotation sur le corps de synchronisation (1), ledit dispositif de synchronisation comprenant, en outre, au moins une réception (7, 14) pour au moins un élément d'arrêt ou de blocage dans le corps de synchronisation (1, 13), ledit corps de synchronisation (1, 13) comprenant un axe de rotation (1a) qui, à l'état assemblé, correspond à l'axe central longitudinal de l'arbre de transmission, au moins une première section (2) et une seconde section (3) du corps de synchronisation étant formées, chacune, à partir de tôle en étant agencées, en regardant sur l'axe de rotation en direction transversale, l'une sur l'autre, et parallèles, l'une à l'autre, le siège de glissement (4) étant muni d'au moins une surface périphérique qui est orientée radialement vers l'extérieur et est profilée au moins partiellement, et ladite réception (7, 14) interrompant la surface périphérique par segments en direction périphérique, **caractérisé en ce que** la première section (2) et la seconde section (3) enferment, ensemble, au moins un espace vide (5), la réception (7) est définie en direction longitudinale, au moins d'un côté, par une première entretoise (8) qui s'étend en direction périphérique, et l'entretoise (8) est munie d'un moyen de fixation pour fixer en rotation, au moins, un anneau de synchronisation qui coopère avec le corps de synchronisation (1, 13),

2. Corps de synchronisation selon la revendication 1, **caractérisé en ce que** le moyen de fixation est formé par un évidement (11) qui est ouvert en direction longitudinale de l'axe de rotation vers le côté qui est orienté à l'opposé de la réception (7).

3. Corps de synchronisation selon la revendication 1, **caractérisé en ce que** le moyen de fixation est agencé dans un entredent et est formé par une déformation de l'entretoise qui s'écarte de la forme circulaire d'arc du cercle de base de la denture.

4. Corps de synchronisation selon la revendication 3, **caractérisé en ce que** la déformation est formée par un aplatissement (16).

5. Corps de synchronisation selon la revendication 2 ou 3, **caractérisé en ce que** la première section (2) et la seconde section (3) sont configurées chacune, en forme de cuvette et sont alignées, l'une à l'autre, entre leurs côtés frontaux opposés, ces sections enferment un espace vide annulaire (5), et que, au moins l'une de ces sections (2, 3) forme par une partie de sa paroi qui délimite l'espace vide dans la direction longitudinale, un arrêt (9, 10) sur un côté frontal du corps de synchronisation.

6. Corps de synchronisation selon la revendication 2 ou 3, **caractérisé en ce que** le siège de glissement (4) est formé par un feuillard en tôle qui est muni de l'entretoise (8) et du moyen de fixation en étant cintré en forme annulaire et fixé sur au moins l'une des sections (2, 3).
